# EUROPÄISCHE PATENTSCHRIFT

(11) **EP 1 633 601 B1**
(45) Veröffentlichungstag und Bekanntmachung des Hinweises auf die Patenterteilung: **18.08.2010**
(21) Anmeldenummer: 04738674.3
(22) Anmeldetag: 14.06.2004
(51) Int. Cl.: B60R 1/06

(54) **AUSSENRÜCKBLICKSPIEGEL FÜR FAHRZEUGE, VORZUGSWEISE FÜR KRAFTFAHRZEUGE**
EXTERNAL REARVIEW MIRROR FOR VEHICLES, PREFERABLY MOTOR VEHICLES
RETROVISEUR EXTERIEUR POUR VEHICULES, DE PREFERENCE POUR VEHICULES AUTOMOBILES

(30) Priorität: 17.06.2003 DE 10327180
(43) Veröffentlichungstag der Anmeldung: 15.03.2006
(73) Patentinhaber: SMR Patents S.à.r.l., 1653 Luxembourg (LU)
(72) Erfinder: OEHMANN, Roland, 70188 Stuttgart (DE)
(74) Vertreter: Rausch, Gabriele
(86) Internationale Anmeldenummer: PCT/DE2004/001222
(87) Internationale Veröffentlichungsnummer: WO 2004/113124

(56) Entgegenhaltungen:
- WO-A-2004/009408
- DE-U- 9 410 562
- DE-U- 20 106 321
- PATENT ABSTRACTS OF JAPAN Bd. 2003, Nr. 03, 5. Mai 2003 (2003-05-05) -& JP 2002 337604 A (ISHIZAKI HONTEN:KK), 27. November 2002 (2002-11-27)
- PATENT ABSTRACTS OF JAPAN Bd. 1998, Nr. 12, 31. Oktober 1998 (1998-10-31) & JP 10 181452 A (SAKAE RIKEN KOGYO KK), 7. Juli 1998 (1998-07-07)
- PATENT ABSTRACTS OF JAPAN Bd. 2000, Nr. 25, 12. April 2001 (2001-04-12) & JP 2001 233130 A (ICHIKOH IND LTD), 28. August 2001 (2001-08-28)

## Beschreibung

Die Erfindung betrifft einen Außenrückblickspiegel für Fahrzeuge, vorzugsweise für Kraftfahrzeuge, nach dem Oberbegriff des Anspruches 1.

Bei Außenrückblickspiegeln ist es bekannt, das Spiegelgehäuse mit dem Spiegelträger über eine Blechformfeder zu verbinden. Die Herstellung der Blechformfeder verteuert den Außenrückblickspiegel und erschwert dessen Montage.

Beim gattungsgemäßen Außenrückblickspiegel (DE 201 06 321 U1) besteht das Spiegelgehäuse aus zwei Gehäuseteilen, die rastend miteinander verbunden werden. Das eine Gehäuseteil wird zunächst über eine Niete mit dem Spiegelträger verbunden.

Bei einem anderen bekannten Außenrückblickspiegel (Patent Abstracts of Japan Bd. 2003, Nr. 03, 5. Mai 2003 (2003-05-05) -& JP 2002 337604 A (Ishizaki Honten:KK), bei dem in die Außenwandung des Spiegelgehäuses ein Leuchtenkörper eingesetzt ist.

Der Erfindung liegt die Aufgabe zugrunde, den gattungsgemäßen Außenrückblickspiegel so auszubilden, dass er kostengünstig hergestellt und montiert werden kann.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel werden das Spiegelgehäuse und der Spiegelträger unmittelbar miteinander über die Rasteinrichtung verbunden. Dadurch kann eine zusätzliche Formfeder eingespart werden, so dass der Spiegelkopf und damit der gesamte Außenrückblickspiegel kostengünstig gefertigt und auch einfach montiert werden kann. Die der Rasteinrichtung zugeordnete Positioniereinrichtung stellt sicher, dass für den Rastvorgang das Spiegelgehäuse und der Spiegelträger einwandfrei zueinander ausgerichtet sind.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: eine Vorderansicht eines Spiegelgehäuses ohne Spie- gelglas eines erfindungsgemäßen Außenrückblickspie- gels,
- Fig. 2: einen in das Spiegelgehäuse einsetzbaren Spiegelträger in Rückansicht,
- Fig. 3: den Spiegelträger gemäß Fig. 2 in Vorderansicht,
- Fig. 4: das Spiegelgehäuse mit verrastetem Spiegelträger in Vorderansicht,

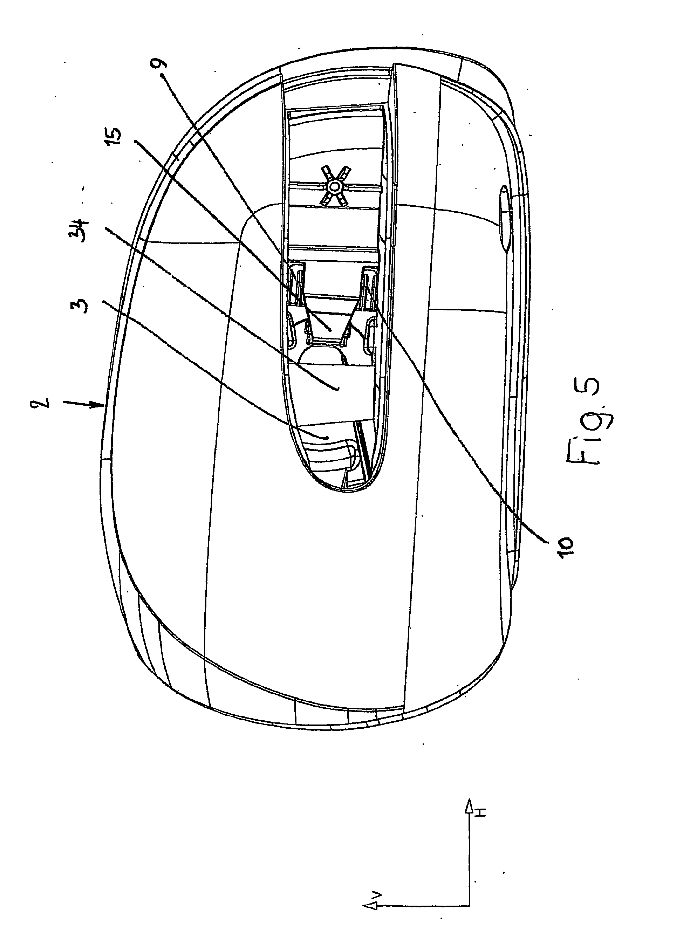

- Fig. 5: das Spiegelgehäuse mit dem verrasteten Spiegelträger in Rückansicht,
- Fig. 6: in vergrößerter Darstellung einen Schnitt längs der Linie A-A in Fig. 4,
- Fig. 7: in vergrößerter Darstellung einen Schnitt längs der Linie B-B in Fig. 4,

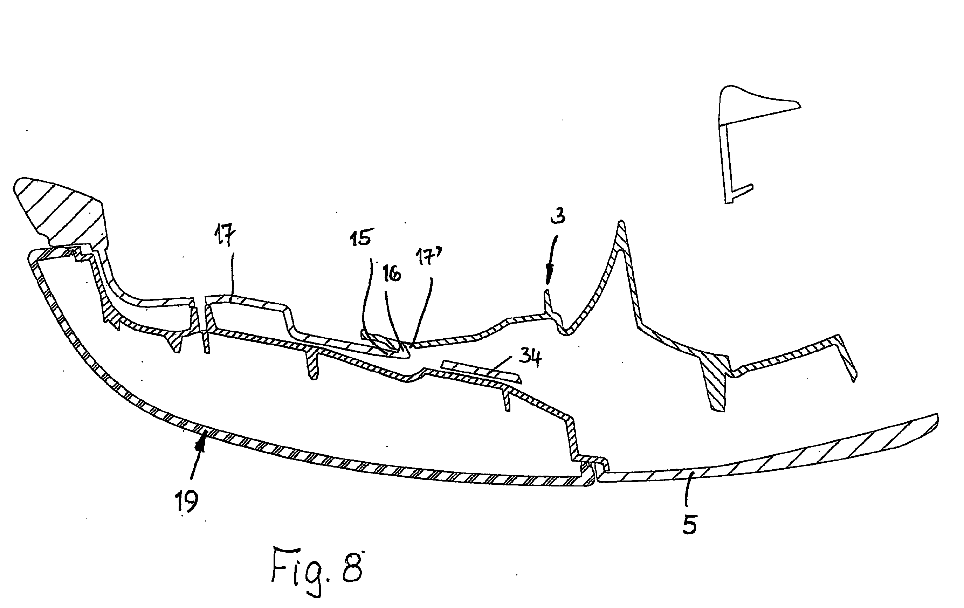

- Fig. 8: eine Darstellung entsprechend Fig. 7 mit einer in den Außenrückblickspiegel eingesetzten Wiederholblink- leuchte,
- Fig. 9: den Rastbereich zwischen dem Spiegelträger und dem Spiegelgehäuse gemäß Fig. 7 in vergrößerter Darstel- lung,
- Fig. 10: eine Rückansicht des Spiegelgehäuses gemäß Fig. 1,

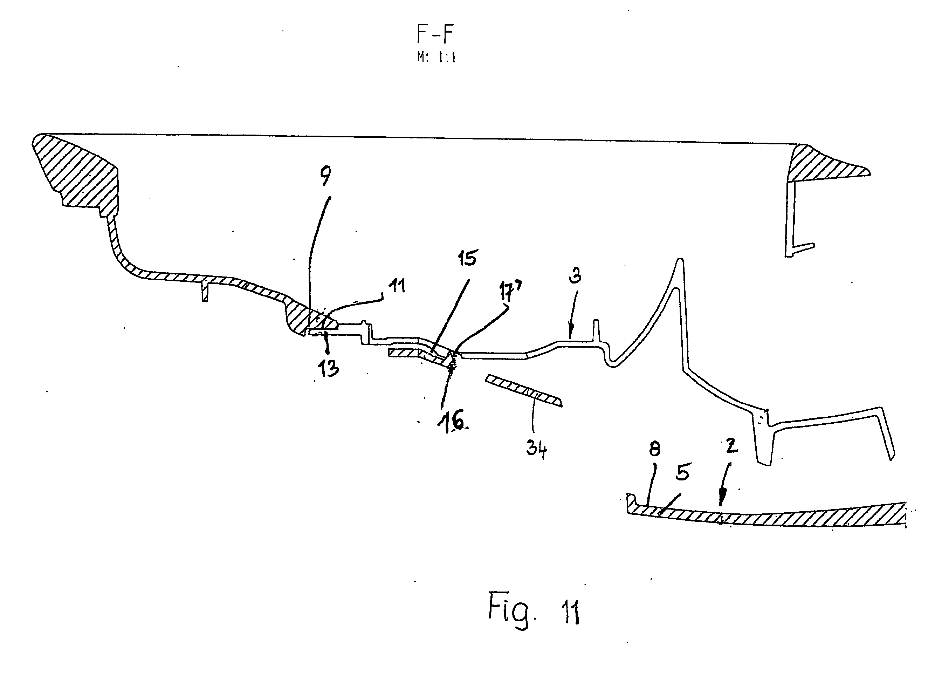

- Fig. 11: in einem Längsschnitt den Spiegelkopf des erfindungs- gemäßen Außenrückblickspiegels,
- Fig. 12: im Längsschnitt eine zweite Ausführungsform des Spie- gelkopfes des erfindungsgemäßen Außenrückblickspie- gels,
- Fig. 13: im Längsschnitt eine Wiederholblinkleuchte, die in den Spiegelkopf des erfindungsgemäßen Außenrückblick- spiegels gemäß Fig. 12 eingesetzt wird,
- Fig. 14: in vergrößerter Darstellung den Rastbereich zwischen dem Spiegelträger und dem Spiegelgehäuse gemäß Fig. 12.

Der Außenrückblickspiegel für Fahrzeuge hat einen Spiegelkopf 1, der in bekannter Weise mit einem (nicht dargestellten) Spiegelfuß verbunden ist, der am Fahrzeug befestigt ist. Der Spiegelkopf 1 kann gegenüber dem Spiegelfuß in und entgegen Fahrtrichtung des Fahrzeuges abgeklappt werden. Es ist möglich, den Spiegelkopf 1 motorisch aus der Gebrauchslage in eine Parkstellung zu verstellen, in der sich der Spiegelkopf seitlich am Fahrzeug befindet. Es ist möglich, daß der Spiegelkopf 1 in und entgegen Fahrtrichtung des Fahrzeuges um eine einzige aufrechte Achse schwenkbar gegenüber dem Spiegelfuß ist. Es ist aber auch möglich, für die beiden Schwenkrichtungen des Spiegelkopfes 1 gegenüber dem Spiegelfuß zwei getrennte, aufrechte Schwenkachsen vorzusehen.

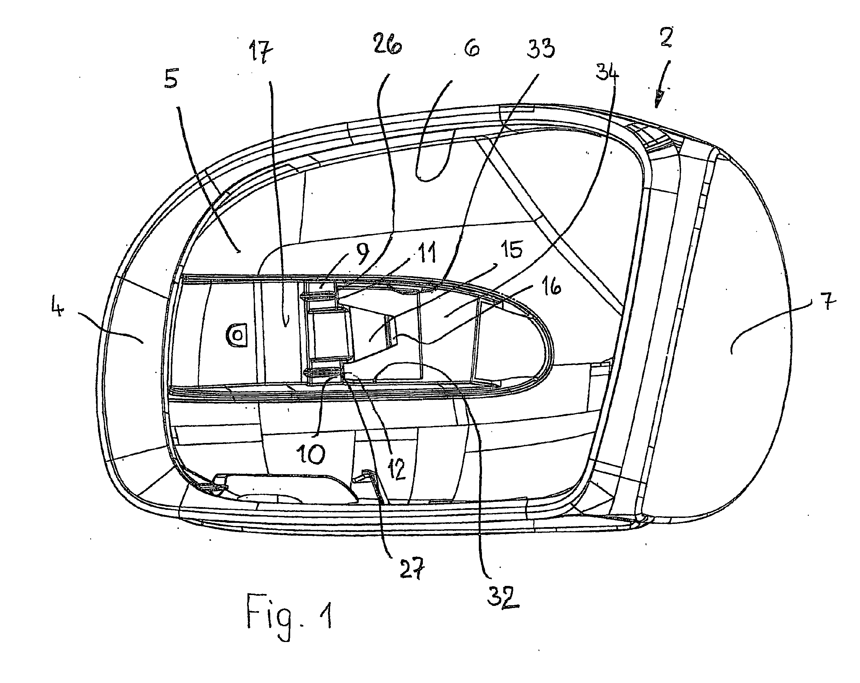

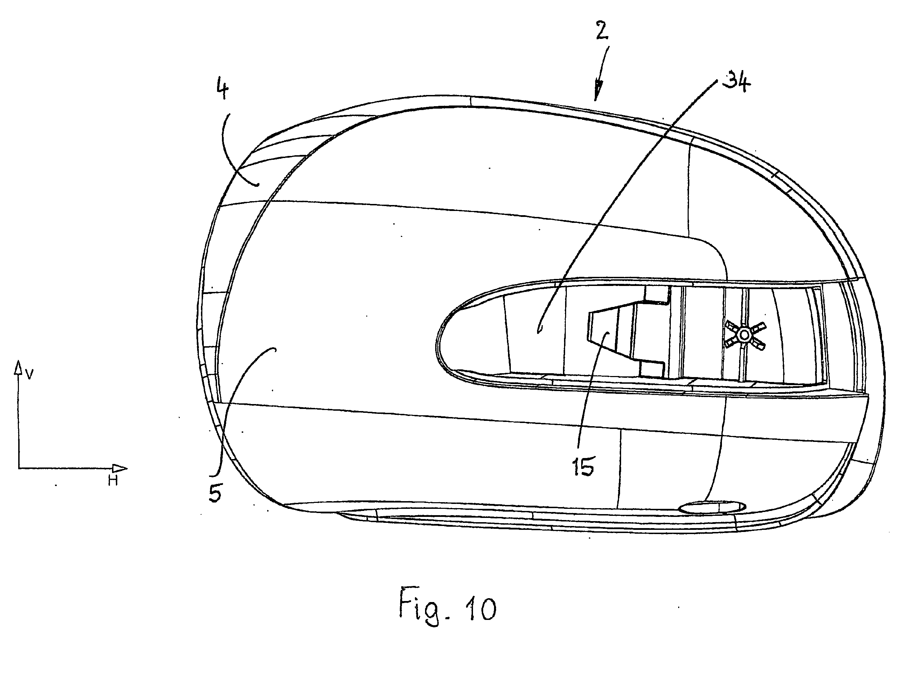

Der Spiegelkopf 1 hat ein Spiegelgehäuse 2 (Fig. 1 und 10) und einen Spiegelträger 3, der in das Spiegelgehäuse 2 geschoben wird. Das Spiegelgehäuse 2 hat eine umlaufende Seitenwand 4, die von einer Rückwand 5 absteht und vorteilhaft einstückig mit ihr ausgebildet ist. Die Seitenwand 4 begrenzt eine Öffnung 6, in der ein (nicht dargestelltes) Spiegelglas liegt, das auf dem Spiegelträger 3 gelagert ist. An der dem (nicht dargestellten) Spiegelfuß zugewandten Seite ist das Spiegelgehäuse 2 offen (Fig. 1). Durch diese Einschuböffnung 7 kann der Spiegelträger 3 in das Spiegelgehäuse 2 geschoben werden. Die Rückwand 5 des Spiegelgehäuses 2, die in der Einbaulage des Außenrückblickspiegels in Fahrtrichtung des Fahrzeuges nach vorn weist, ist bauchig ausgebildet.

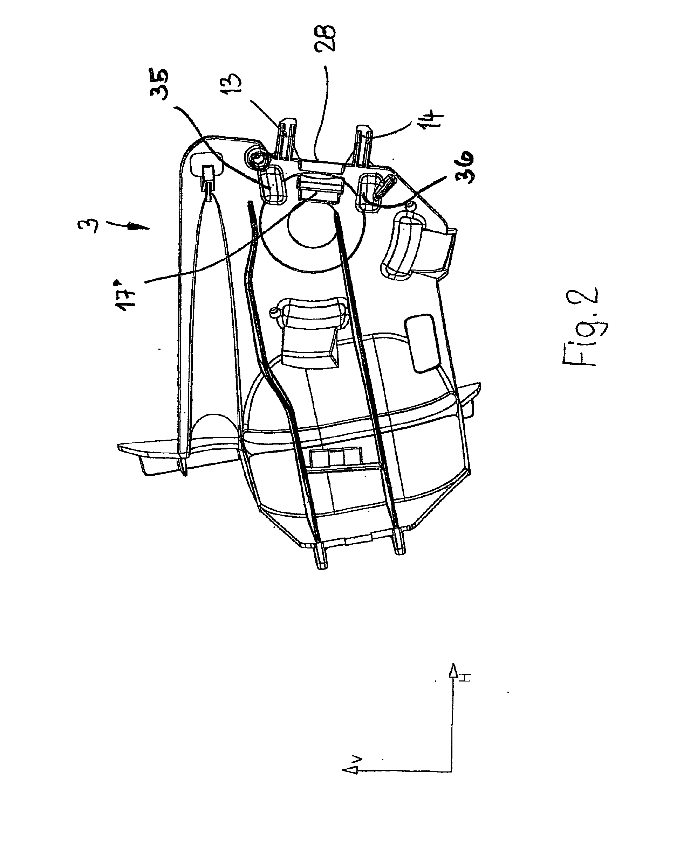

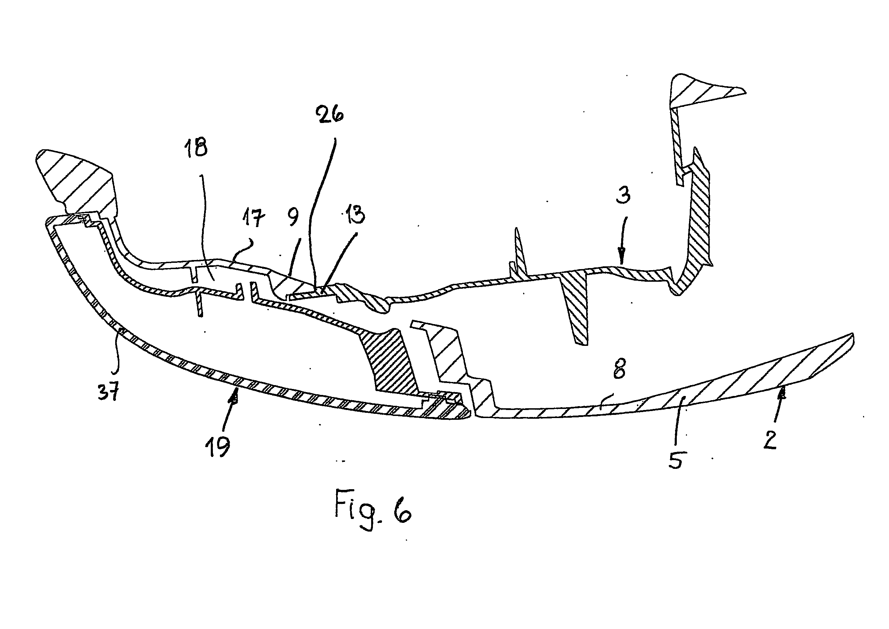

Von der Innenseite 8 der Rückwand 5 steht ein Wandabschnitt 17 ab, der mit zwei im Querschnitt U-förmigen Profilteilen 9 und 10 versehen ist (Fig. 1 und 6), die sich in Einschubrichtung des Spiegelträgers 3 erstrecken und jeweils einen Einschubtunnel 11 und 12 bilden, in den der Spiegelträger 3 mit jeweils einem Formschlußteil 13, 14 (Fig. 2) in noch zu beschreibender Weise eingreift. Die beiden Einschubtunnel 11, 12 sind an ihren in Einschubrichtung des Spiegelträgers 3 vorderen Enden geschlossen. Die Profilteile 9, 10 sind vorteilhaft einstückig mit dem Wandabschnitt 17 des Spiegelkopfes 1 ausgebildet.

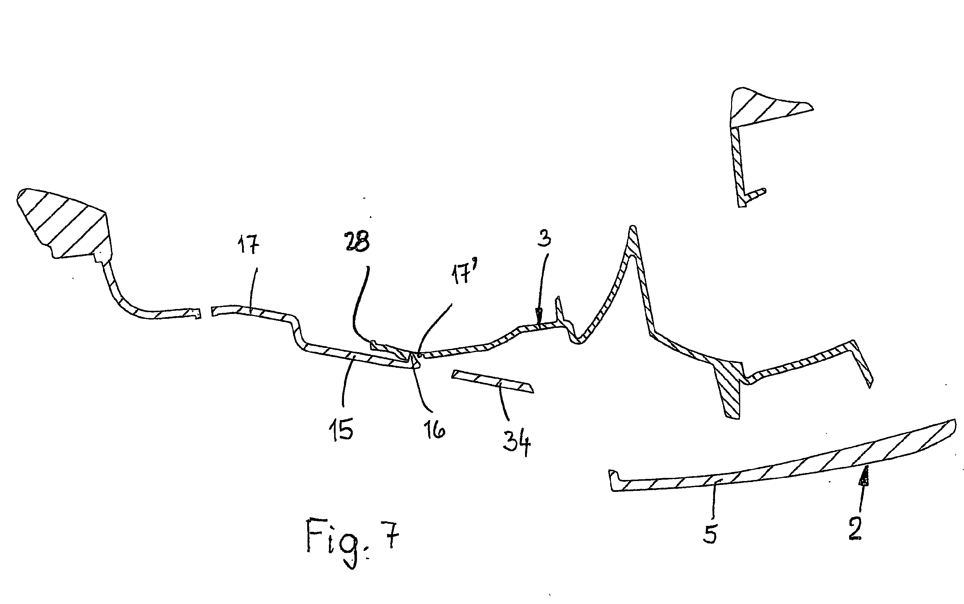

Im Bereich zwischen den beiden Profilteilen 9, 10 liegt eine Rastzunge 15 (Fig. 1), die am freien Ende mit einer Rastnase 16 versehen ist. Die Rastzunge 15 greift in eine Rastvertiefung 17' oder Rastöffnung (Fig. 7) des Spiegelträgers 3 ein. Die elastisch federnd ausgebildete Rastzunge 15 ist frei kragend ausgebildet und verjüngt sich in Richtung auf ihr freies Ende. Wie Fig. 1 zeigt, entspricht die Breite der Rastzunge 15 im Bereich der Profilteile 9, 10 etwa deren Abstand voneinander.

Der Wandabschnitt 17 ist gegenüber der Innenseite 8 der Rückwand 5 nach innen versetzt. Er hat U-förmigen Querschnitt und liegt, in Einschubrichtung des Spiegelträgers 3 gesehen, mit Abstand von der Innenseite 8 der Rückwand 5. Der Wandabschnitt 17 begrenzt einen Aufnahmeraum 18 (Fig. 6) für eine Zusatzleuchte 19, die beispielsweise eine Wiederholblinkleuchte ist.

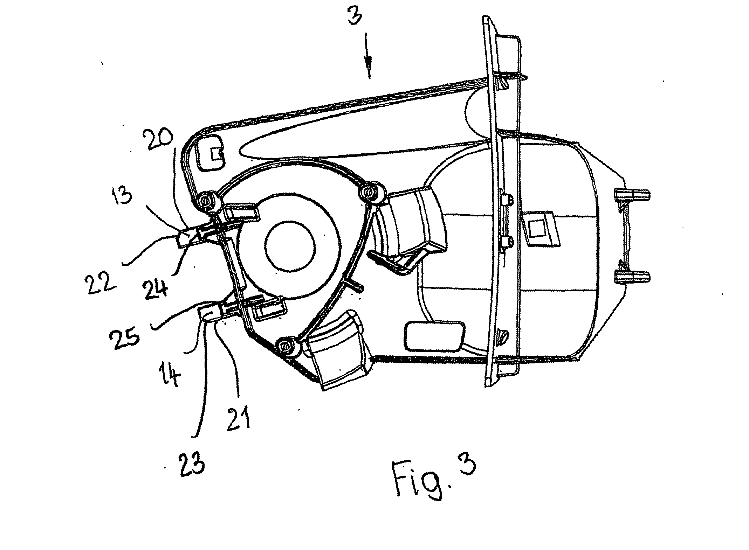

Die beiden Formschlußteile 13, 14 des Spiegelträgers 3 liegen mit Abstand voneinander und parallel zueinander. Sie sind gleich ausgebildet und stehen über den Spiegelträger 3 vor (Fig. 3). Die beiden Formschlußteile 13, 14 sind an ihren voneinander abgewandten, in Einschubrichtung liegenden Längsseiten 20, 21 jeweils mit einer Abschrägung 22, 23 versehen. Durch diese Abschrägungen 22, 23, die in Richtung auf die freien Enden der Formschlußteile 13, 14 konvergierend verlaufen, ist ein sicheres Einschieben der Formschlußteile 13, 14 in die Einschubteile 11, 12 gewährleistet. An ihrer einen Seite sind die Formschlußteile 13, 14 mit einem Anschlag 24, 25 versehen, der sich senkrecht zur Längserstreckung der Formschlußteile 13, 14 erstreckt und mit dem die Formschlußteile in der Einbaulage an einer Stirnseite 26, 27 der Profilteile 9, 10 anliegen. Die Anschläge 24, 25 werden vorteilhaft durch eine senkrecht zur Oberseite der Formschlußteile 13, 14 liegende Schulterfläche gebildet, wie Fig. 6 für den Formschlußteil 13 zeigt.

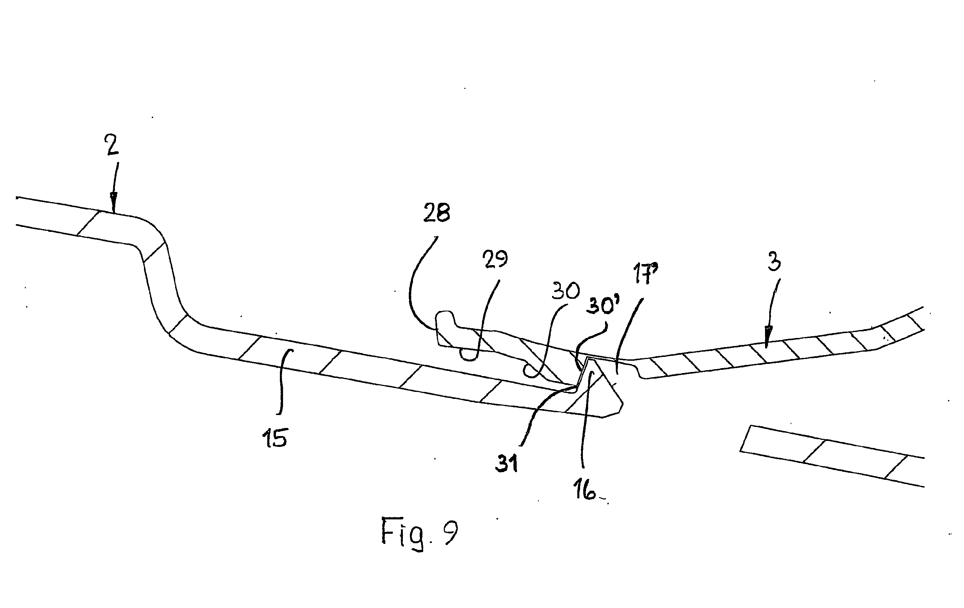

Bei der Montage wird der Spiegelträger 3 durch die Einschuböffnung 7 so in das Spiegelgehäuse 2 eingesetzt, daß die Formschlußteile 13, 14 in die Einschubtunnel 11, 12 des Spiegelgehäuses 2 gelangen. Die Abschrägungen 22, 23 sorgen dafür, daß die beiden Formschlußteile 13, 14 zuverlässig in die Einschubtunnel 11, 12 gelangen. Die sichere Verbindung zwischen dem Spiegelgehäuse 2 und dem Spiegelträger 3 wird durch die Rastzunge 15 erreicht. Beim Einschieben des Spiegelträgers 3 gelangt der in Einschubrichtung vordere Rand 28, von dem die beiden Formschlußteile 13, 14 senkrecht abstehen (Fig. 2), auf die Rastzunge 15. Sie wird beim Einschieben des Spiegelträgers 3 elastisch weggebogen, bis die Rastnase 16 in die Rastöffnung 17' eingreifen kann (Fig. 7). Damit dieser Rastvorgang zuverlässig erfolgen kann, ist der Spiegelträger 3, wie Fig. 9 zeigt, an seiner der Rastzunge 15 zugewandten Unterseite 29 mit einer in Einschubrichtung ansteigenden Schrägfläche 30 versehen, auf die die Rastnase 16 beim Einsteckvorgang gelangt. Aufgrund der Schräglage dieser Schrägfläche 30 wird die Rastzunge 15 beim Einschubvorgang elastisch weggedrückt, bis die Rastnase 16 in die Rastvertiefung 17' einrasten kann. In dieser Lage sind das Spiegelgehäuse 2 und der Spiegelträger 3 einwandfrei fest miteinander verbunden. Die Formschlußteile 13, 14 stellen in einfacher und zuverlässiger Weise sicher, daß der Spiegelträger 3 mühelos in seine exakte Einbauposition gelangt.

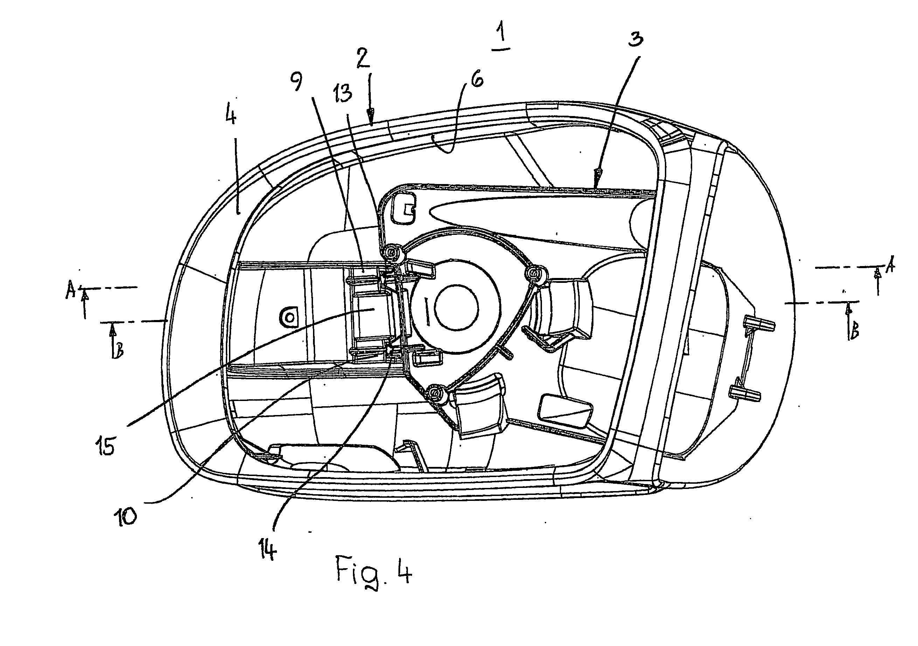

Der Spiegelträger 3 kann vom Spiegelgehäuse 2 nur dann wieder abgenommen werden, wenn die Rastzunge 15 so weit elastisch weggedrückt wird, daß die Rastnase 16 aus der Vertiefung 17' freikommt. Dann kann der Spiegelträger 3 entgegen Einschubrichtung aus dem Spiegelgehäuse 2 gezogen werden. Der Zugriff auf die Rastzunge 14 ist dann möglich, wenn das Spiegelglas abgenommen oder weggeschwenkt ist. Dann kann die Rastzunge 15 mit einem entsprechenden Werkzeug durch die Öffnung 6 (Fig. 4) elastisch weggebogen werden.

Die Rastzunge 15 liegt in Raststellung vorteilhaft unter elastischer Vorspannung am Spiegelträger 3 an, so daß das Spiegelgehäuse 2 und der Spiegelträger 3 in Einschubrichtung spielfrei miteinander verbunden sind.

Die Verbindung zwischen dem Spiegelgehäuse 2 und dem Spiegelträger 3 wird durch die beschriebene Ausbildung von Spiegelgehäuse und Spiegelträger in einfacher Weise erreicht. Der Spiegelträger 3 und/oder das Spiegelgehäuse 2 bestehen vorteilhaft einstückig aus Kunststoff. Der Steckvorgang läßt sich einfach und somit kostengünstig durchführen. Zusätzliche Bauteile, wie beispielsweise Blechformfedern, sind nicht erforderlich. Aufgrund der beschriebenen Ausbildung ergibt sich ein sehr geringer Platzbedarf sowie eine sehr flache Bauweise. Infolge der beschriebenen Vorspannung der Rastverbindung ergibt sich eine sichere Verrastung zwischen dem Spiegelgehäuse 2 und dem Spiegelträger 3. Um eine hohe Vibrationssicherheit des Spiegelgehäuses 2 und/oder des Spiegelträgers 3 zu erreichen, sind die Formschlußteile 13, 14 vorzugsweise in den Einschubtunnels 11, 12 der Profilteile 9, 10 verspannt.

Beim Einschubvorgang des Spiegelträgers 3 in das Spiegelgehäuse 2 sorgt eine Schrägfläche 30' des Spiegelträgers 3 in Verbindung mit einer Schrägfläche 31 der Rastnase 16 (Fig. 9) dafür, daß ein Toleranzausgleich beim Einschubvorgang erreicht wird. Die Schrägfläche 30' begrenzt die Rastvertiefung 17' in Einschubrichtung des Spiegelträgers 3.

An den Wandabschnitt 17 schließen etwa parallel zueinander liegende, von der Rückwand 5 abstehende Seitenwände 32, 33 an (Fig. 1). Die Rastzunge 15 liegt mit Abstand zwischen den Seitenwänden 32, 33 (Fig. 1). Mit Abstand vom freien Ende der Rastzunge 15 sind die Seitenwände 32, 33 durch einen vorteilhaft einstückig mit ihnen ausgebildeten Steg 34 verbunden, der vorteilhaft in Höhe der Oberkanten der Seitenwände 32, 33 liegt und der mit Abstand oberhalb der Rückwand 5 angeordnet ist.

Mit den Seitenwänden 32, 33 wirken an der Unterseite des Spiegelträgers 3 vorgesehene Erhöhungen 35, 36 (Fig. 2) zusammen. Sie gelangen beim Einschubvorgang nahe dem Wandabschnitt 17 auf die Oberkanten der Seitenwände 32, 33. Diese Bereiche der Seitenwände 32, 33 bilden somit Anlaufschrägen.

Die Zusatzleuchte 19 ist im Aufnahmeraum 18 in bekannter Weise befestigt und hat eine Lichtscheibe 37 (Fig. 6), die in der Einbaulage in der Rückwand 5 des Spiegelgehäuses 2 liegt und in Fahrtrichtung des Fahrzeuges nach vorn gerichtet ist. Die Zusatzleuchte 19 ist beispielsweise eine Wiederholblinkleuchte, die in bekannter Weise ausgebildet ist. Ihr vom Spiegelfuß abgewandtes Ende steht über die Außenseite der Rückwand 5 geringfügig vor.

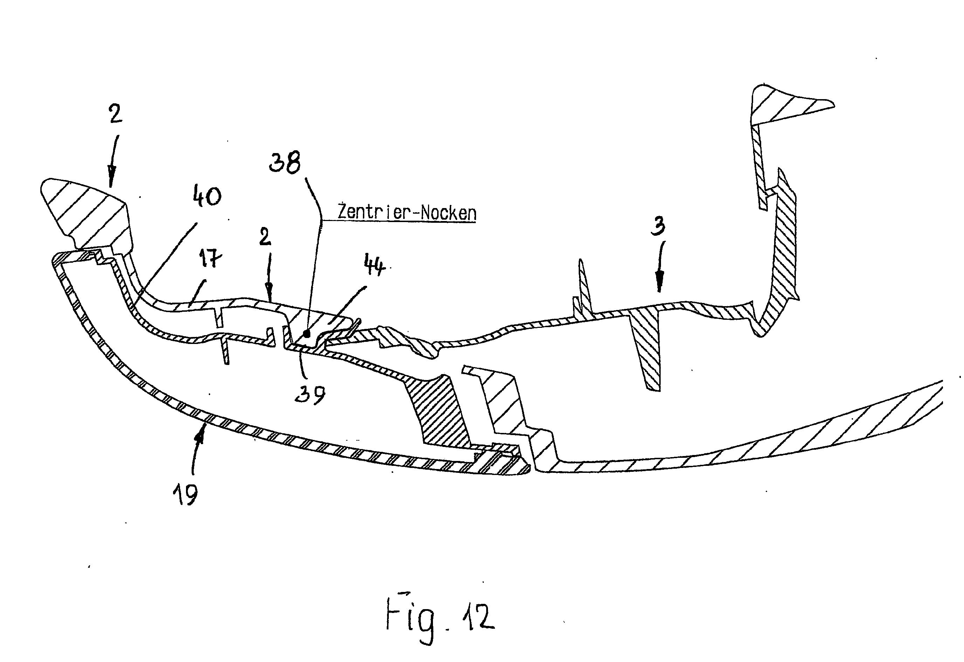

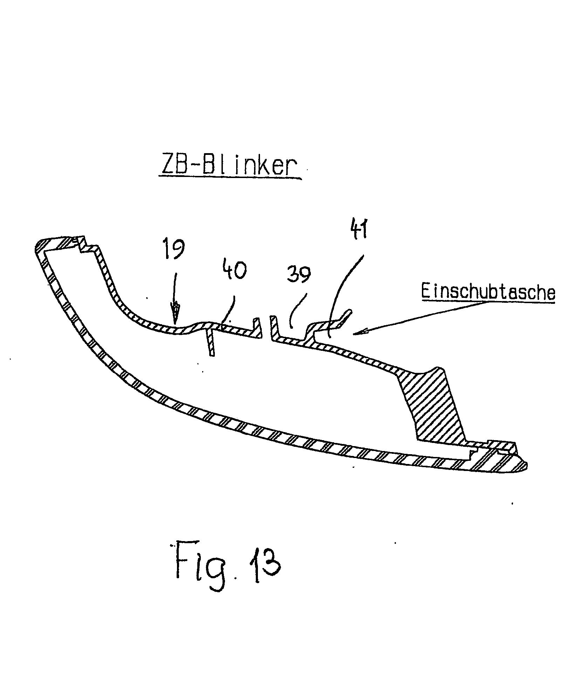

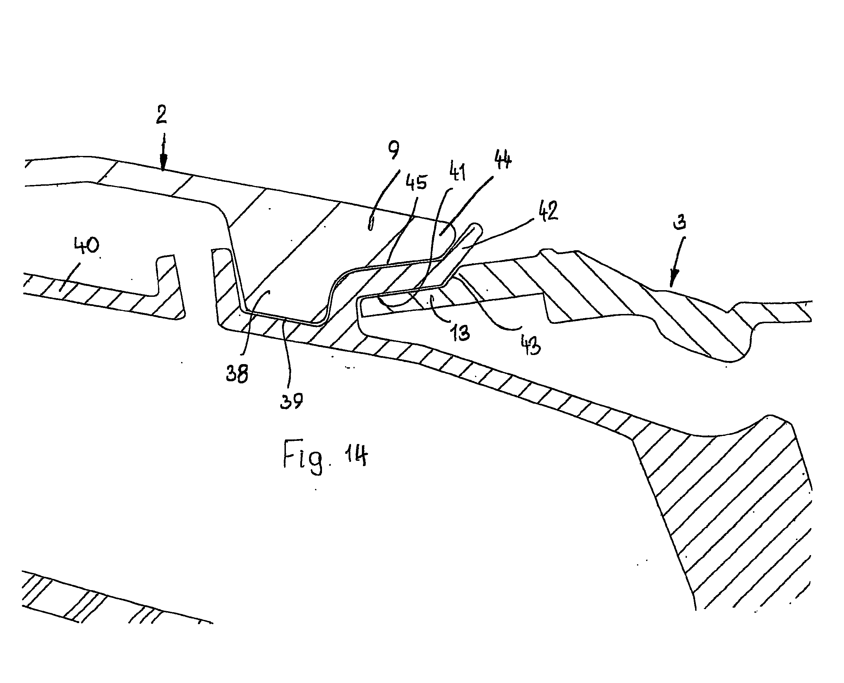

Bei der Ausführungsform gemäß den Fig. 12 bis 14 wird die Zusatzleuchte 19 zwischen dem Spiegelgehäuse 2 und dem Spiegelträger 3 verrastet. Wie die Fig. 12 und 14 zeigen, ist das Spiegelgehäuse 2 in Höhe der Profilteile 9, 10 mit einem vorstehenden Nocken 38 versehen, der in eine Vertiefung 39 eines Gehäuses 40 der Zusatzleuchte 19 eingreift. Die Nocken 38 liegen hinter jeweils einer Einschubtasche 41, in die die Formschlußteile 13, 14 des Spiegelträgers 3 formschlüssig eingreifen. Die Formschlußteile 13, 14 sind gleich ausgebildet wie bei der vorigen Ausführungsform. Der freie Querschnitt der Einschubtaschen 41 verjüngt sich in Einschubrichtung des Spiegelträgers 3, der entsprechend der vorigen Ausführungsform ausgebildet ist. In der Einbaulage liegen die Formschlußteile 13, 14 an der Oberseite der Einschubtasche 41 an (Fig. 14). An die Einschubtasche 41 schließt ein entgegen Einschubrichtung aufwärts gerichteter Rand 42 an, der dafür sorgt, daß beim Einschieben des Spiegelträgers 3 die Formschlußteile 13, 14 zuverlässig in die Einschubtaschen 41 gelangen. Die Formschlußteile 13, 14 liegen in der Einbaulage mit einer Schrägfläche 43 am Rand 42 an. Die Schrägflächen 43 der Formschlußteile 12, 13 bilden somit Anschlagflächen, durch welche die Einschubtiefe der Formschlußteile 13, 14 in die Einschubtaschen 41 bestimmt wird.

Bei der Montage wird der Spiegelträger 3 mit seinen Formschlußteilen 13, 14 in die Einschubtaschen 41 der Zusatzleuchte gesteckt. Gleichzeitig rastet die Rastzunge 15, wie anhand der vorigen Ausführungsform erläutert, in die Rastvertiefung 17' (Fig. 9) des Spiegelträgers 3 ein. Auf diese Weise sind das Spiegelgehäuse 2 und der Spiegelträger 3 verliersicher miteinander verbunden. Das Spiegelgehäuse 2 rastet außerdem mit den Nocken 38 in die Rastvertiefungen 39 des Gehäuses 40 der Zusatzleuchte 19 ein. Auf diese Weise werden das Spiegelgehäuse 2 und die Zusatzleuchte 19 formschlüssig miteinander verbunden. Aufgrund dieses Formschlusses kann die Zusatzleuchte 19 aus dem Außenrückblickspiegel nicht mehr herausgezogen werden, so daß das Spiegelgehäuse 2 und die Zusatzleuchte 19 verliersicher miteinander verbunden sind.

Im dargestellten und beschriebenen Ausführungsbeispiel hat das Gehäuse 40 der Zusatzleuchte 19 zwei Vertiefungen 39, in die jeweils ein Nocken 38 des Spiegelgehäuses 2 eingreift. Für eine verliersichere Verbindung zwischen dem Spiegelgehäuse 2 und der Zusatzleuchte 19 reicht auch ein einziger Nocken 38 und dementsprechend eine einzige Rastvertiefung 39 aus.

Der Wandabschnitt 17 des Spiegelgehäuses 2 übergreift mit einem Randbereich 44 die Einschubtasche 41, die an der Unterseite 45 des Randbereiches 44 anliegt (Fig. 14). Die Unterseite 45 geht in die Mantelfläche des Nockens 38 über. Dadurch wird ein Anschlag für die Einschubtasche 41 am Wandabschnitt 17 des Spiegelgehäuses 2 gebildet.

Der Spiegelkopf 1 kann im Spiegelgehäuse 2 weitere Elemente enthalten, wie wenigstens eine Umfeldleuchte zur Beleuchtung des Bodenbereiches neben dem Fahrzeug, eine Antenne, eine Heizeinrichtung für das Spiegelglas, ein Verstellmotor zur Einstellung des Spiegelglases, wenigstens ein Lautsprecher, Teile eines Garagentoröffners, wie ein Sender, ein GPS-Modul und dergleichen. Auch in dem Spiegelfuß, an den der Spiegelkopf angelenkt ist, können weitere Bestandteile enthalten sein, wie wenigstens eine Umfeldleuchte, eine Wiederholblinkleuchte, Schalteinrichtungen zur Steuerung von im Spiegelkopf untergebrachten Elementen und dergleichen.

## Patentansprüche

1. Außenrückblickspiegel für Fahrzeuge, vorzugsweise für Kraftfahrzeuge, mit einem Spiegelfuß und einem Spiegelkopf (1), der ein Gehäuse (2) aufweist, das mit einem Spiegelträger (3) verbunden ist, **dadurch gekennzeichnet, dass** das Spiegelgehäuse (2) und der Spiegelträger (3) durch wenigstens eine Rasteinrichtung (15, 16, 17') miteinander verbunden sind, der wenigstens eine Positioniereinrichtung (9, 10, 13, 14) zugeordnet ist, mit der das Spiegelgehäuse (2) und der Spiegelträger (3) für den Rastvorgang zueinander ausrichtbar sind.

2. Außenrückblickspiegel nach Anspruch 1,
**dadurch gekennzeichnet, daß** die Rasteinrichtung (15, 16, 17') wenigstens eine Rastzunge (15) aufweist, die mit mindestens einer Rastvertiefung (17') zusammenwirkt.

3. Außenrückblickspiegel nach Anspruch 2,
**dadurch gekennzeichnet, da** die Rastzunge (15) Teil des Spiegelgehäuses (2) ist.

4. Außenrückblickspiegel nach Anspruch 2 oder 3,
**dadurch gekennzeichnet, daß** die Rastvertiefung (17') im Spiegelträger (3) vorgesehen ist.

5. Außenrückblickspiegel nach einem der Ansprüche 2 bis 4,
**dadurch gekennzeichnet, daß** die Rastzunge (15) mit Abstand von der Rückwand (5) des Spiegelgehäuses (2) vorgesehen ist.

6. Außenrückblickspiegel nach einem der Ansprüche 2 bis 5,
**dadurch gekennzeichnet, daß** die Rastzunge (15) am freien Ende wenigstens eine Rastnase (16) aufweist.

7. Außenrückblickspiegel nach einem der Ansprüche 1 bis 6,
**dadurch gekennzeichnet, daß** die Positioniereinrichtung (9, 10, 13, 14) wenigstens eine Aufnahme (11, 12) für wenigstens einen Einschubteil (13, 14) aufweist.

8. Außenrückblickspiegel nach Anspruch 7,
**dadurch gekennzeichnet, daß** die Aufnahme (11, 12) am Spiegelgehäuse (2) vorgesehen ist.

9. Außenrückblickspiegel nach Anspruch 7 oder 8,
**dadurch gekennzeichnet, daß** die Aufnahme (11, 12) taschenförmig ausgebildet ist.

10. Außenrückblickspiegel nach einem der Ansprüche 7 bis 9,
**dadurch gekennzeichnet, daß** die Aufnahme (11, 12) durch einen Profilteil (9, 10) des Spiegelgehäuses (2) gebildet ist.

11. Außenrückblickspiegel nach einem der Ansprüche 1 bis 10,
**dadurch gekennzeichnet, daß** die Positioniereinrichtung (9, 10, 13, 14) benachbart zur Rasteinrichtung (15, 16, 17') angeordnet ist.

12. Außenrückblickspiegel nach einem der Ansprüche 1 bis 11,
**dadurch gekennzeichnet, daß** die Rasteinrichtung (15, 16, 17') zwischen zwei Positioniereinrichtungen (9, 10, 13, 14) liegt.

13. Außenrückblickspiegel nach Anspruch 12,
**dadurch gekennzeichnet, daß** die beiden Positioniereinrichtungen (9, 10, 13, 14) gleich ausgebildet sind.

14. Außenrückblickspiegel nach einem der Ansprüche 7 bis 13,
**dadurch gekennzeichnet, daß** der Einschubteil (13, 14) über einen Rand (28) des Spiegelträgers (3) vorsteht.

15. Außenrückblickspiegel nach einem der Ansprüche 7 bis 14,
**dadurch gekennzeichnet, daß** der Einschubteil (13, 14) in der Aufnahme (11, 12) verspannt ist.

16. Außenrückblickspiegel nach einem der Ansprüche 7 bis 15,
**dadurch gekennzeichnet, daß** der Einschubteil (13, 14) an seinem in Einschubrichtung vorderen Ende eine Abschrägung (22, 23) aufweist.

17. Außenrückblickspiegel nach einem der Ansprüche 1 bis 16,
**dadurch gekennzeichnet, daß** das Spiegelgehäuse (2) wenigstens eine Anlaufschräge (32, 33) für den Spiegelträger (3) aufweist.

18. Außenrückblickspiegel nach einem der Ansprüche 1 bis 17,
**dadurch gekennzeichnet, daß** am Spiegelgehäuse (2) wenigstens eine Zusatzleuchte (19) befestigbar ist.

19. Außenrückblickspiegel, insbesondere nach einem der Ansprüche 1 bis 18,
**dadurch gekennzeichnet, daß** am Spiegelgehäuse (2) über wenigstens eine Formschlußverbindung (38, 39) wenigstens eine Zusatzleuchte (19) befestigbar ist.

20. Außenrückblickspiegel nach Anspruch 19,
**dadurch gekennzeichnet, daß** die Formschlußverbindung (38, 39) wenigstens einen am Spiegelgehäuse (2) vorgesehenen Nocken (38) aufweist, der in eine Vertiefung (39) an einem Gehäuse (40) der Zusatzleuchte (19) eingreift.

21. Außenrückblickspiegel, insbesondere nach einem der Ansprüche 1 bis 20,
**dadurch gekennzeichnet, daß** der Spiegelträger (3) mit wenigstens einem Formschlußteil (13, 14) in wenigstens eine Aufnahme (41) eines Gehäuses (40) einer Zusatzleuchte (19) eingreift.

22. Außenrückblickspiegel nach Anspruch 21,
**dadurch gekennzeichnet, daß** die Aufnahme (41) entgegen Einschubrichtung des Spiegelträgers (3) erweitert ausgebildet ist.

23. Außenrückblickspiegel nach Anspruch 21 oder 22,
**dadurch gekennzeichnet, daß** die Aufnahme (41) von einem Teil (44) des Spiegelgehäuses (2) übergriffen ist.

## Claims

1. Outside rear view mirror for vehicles, preferably for motor vehicles, comprising a mirror base and a mirror head (1), which comprises a housing (2) that is connected to a mirror mounting bracket (3), **characterised in that** the mirror housing (2) and the mirror mounting bracket (3) are interconnected by at least one catch means (15, 16, 17'), which is associated with at least one positioning means (9, 10, 13, 14), with which the mirror housing (2) and the mirror mounting bracket (3) can be aligned relative to one another for the locking process.

2. Outside rear view mirror according to claim 1, **characterised in that** the catch means (15, 16, 17') comprises at least one snap-in tongue (15) that cooperates with at least one catch recess (17').

3. Outside rear view mirror according to claim 2, **characterised in that** the snap-in tongue (15) is part of the mirror housing (2).

4. Outside rear view mirror according to either claim 2 or claim 3, **characterised in that** the catch recess (17') is provided in the mirror mounting bracket (3).

5. Outside rear view mirror according to any one of claims 2 to 4, **characterised in that** the snap-in tongue (15) is provided at a distance from the back wall (5) of the mirror housing (2).

6. Outside rear view mirror according to any one of claims 2 to 5, **characterised in that** the snap-in tongue (15) comprises at least one catch piece (16) at the free end.

7. Outside rear view mirror according to any one of claims 1 to 6, **characterised in that** the positioning means (9, 10, 13, 14) comprises at least one receptacle (11, 12) for at least one insertion component (13, 14).

8. Outside rear view mirror according to claim 7, **characterised in that** the receptacle (11, 12) is provided at the mirror housing (2).

9. Outside rear view mirror according to either claim 7 or claim 8, **characterised in that** the receptacle (11, 12) is pocket-shaped.

10. Outside rear view mirror according to any one of claims 7 to 9, **characterised in that** the receptacle (11, 12) is formed by a profile section (9, 10) of the mirror housing (2).

11. Outside rear view mirror according to any one of claims 1 to 10, **characterised in that** the positioning means (9, 10, 13, 14) is arranged beside the catch means (15, 16, 17').

12. Outside rear view mirror according to any one of claims 1 to 11, **characterised in that** the catch means (15, 16, 17') lies between two positioning means (9, 10, 13, 14).

13. Outside rear view mirror according to claim 12, **characterised in that** the two positioning means (9, 10, 13, 14) are identical.

14. Outside rear view mirror according to any one of claims 7 to 13, **characterised in that** the insertion component (13, 14) extends out from an edge (28) of the mirror mounting bracket (3).

15. Outside rear view mirror according to any one of claims 7 to 14, **characterised in that** the insertion component (13, 14) is braced in the receptacle (11, 12).

16. Outside rear view mirror according to any one of claims 7 to 15, **characterised in that** the insertion component (13, 14) comprises a bevel (22, 23) at its front end relative to the direction of insertion.

17. Outside rear view mirror according to any one of claims 1 to 16, **characterised in that** the mirror housing (2) comprises at least one angled surface (32, 33) for the mirror mounting bracket (3).

18. Outside rear view mirror according to any one of claims 1 to 17, **characterised in that** at least one additional light (19) can be fixed to the mirror housing (2).

19. Outside rear view mirror, in particular according to any one of claims 1 to 18, **characterised in that** at least one additional light (19) can be fixed to the mirror housing (2) via at least one positive locking connection (38, 39).

20. Outside rear view mirror according to claim 19, **characterised in that** the positive locking connection (38, 39) comprises at least one cam (38) provided at the mirror housing (2), which cam catches into a recess (39) in a housing (40) of the additional light (19).

21. Outside rear view mirror, in particular according to any one of claims 1 to 20, **characterised in that** the mirror mounting bracket (3) catches into at least one receptacle (41) of a housing (40) of an additional light (19) via at least one positive locking component (13, 14).

22. Outside rear view mirror according to claim 21, **characterised in that** the receptacle (41) tapers in the direction of insertion of the mirror mounting bracket (3).

23. Outside rear view mirror according to either claim 21 or claim 22, **characterised in that** the receptacle (41) is overlapped by a part (44) of the mirror housing (2).

## Revendications

1. Rétroviseur extérieur pour véhicules, de préférence pour véhicules automobiles, comprenant un pied de miroir et une tête de miroir (1) qui présente un boîtier (2) qui est relié à un support de miroir (3),
**caractérisé en ce que** le boîtier de miroir (2) et le support de miroir (3) sont reliés ensemble par au moins un dispositif d'encliquetage (15, 16, 17') auquel est associé au moins un dispositif de positionnement (9, 10, 13, 14), avec lequel le boîtier de miroir (2) et le support de miroir (3) peuvent être orientés l'un par rapport à l'autre pour le processus d'encliquetage.

2. Rétroviseur extérieur selon la revendication 1,
**caractérisé en ce que** le dispositif d'encliquetage (15, 16, 17') présente au moins une languette d'encliquetage (15) qui coopère avec au moins un évidement d'encliquetage (17').

3. Rétroviseur extérieur selon la revendication 2,
**caractérisé en ce que** la languette d'encliquetage (15) fait partie du boîtier de miroir (2).

4. Rétroviseur extérieur selon la revendication 2 ou 3,
**caractérisé en ce que** l'évidement d'encliquetage (17') est prévu dans le support de miroir (3).

5. Rétroviseur extérieur selon l'une quelconque des revendications 2 à 4,
**caractérisé en ce que** la languette d'encliquetage (15) est prévue à l'écart de la paroi arrière (5) du boîtier de miroir (2).

6. Rétroviseur extérieur selon l'une quelconque des revendications 2 à 5,
**caractérisé en ce que** la languette d'encliquetage (15) présente au moins un nez d'encliquetage (16) à l'extrémité libre.

7. Rétroviseur extérieur selon l'une quelconque des revendications 1 à 6,
**caractérisé en ce que** le dispositif de positionnement (9, 10, 13, 14) présente au moins un logement (11, 12) pour au moins une pièce enfichable (13, 14).

8. Rétroviseur extérieur selon la revendication 7,
**caractérisé en ce que** le logement (11, 12) est prévu sur le boîtier de miroir (2).

9. Rétroviseur extérieur selon la revendication 7 ou 8,
**caractérisé en ce que** le logement (11, 12) est réalisé en forme de poche.

10. Rétroviseur extérieur selon l'une quelconque des revendications 7 à 9,
**caractérisé on ce que** le logement (11, 12) est formé par une pièce profilée (9, 10) du boîtier de miroir (2).

11. Rétroviseur extérieur selon l'une quelconque des revendications 1 à 10,
**caractérisé en ce que** le dispositif de positionnement (9, 10, 13, 14) est disposé au voisinage du dispositif d'encliquetage (15, 16, 17').

12. Rétroviseur extérieur selon l'une quelconque des revendications 1 à 11,
**caractérisé en ce que** le dispositif d'encliquetage (15, 16, 17') se situe entre deux dispositifs de positionnement (9, 10, 13, 14).

13. Rétroviseur extérieur selon la revendication 12,
**caractérisé en ce que** les deux dispositifs de positionnement (9, 10, 13, 14) sont réalisés de manière identique.

14. Rétroviseur extérieur selon l'une quelconque des revendications 7 à 13,
**caractérisé en ce que** la pièce enfichable (13, 14) fait saillie au-dessus d'un bord (28) du support de miroir (3).

15. Rétroviseur extérieur selon l'une quelconque des revendications 7 à 14,
**caractérisé en ce que** la pièce enfichable (13, 14) est déformée dans le logement (11, 12).

16. Rétroviseur extérieur selon l'une quelconque des revendications 7 à 15,
**caractérisé en ce que** la pièce enfichable (13, 14) présente un biseau (22, 23) à son extrémité avant dans le sens d'enfichage.

17. Rétroviseur extérieur selon l'une quelconque des revendications 1 à 16,
**caractérisé en ce que** le boîtier de miroir (2) présente au moins un biseau d'adossement (32, 33) pour le support de miroir (3).

18. Rétroviseur extérieur selon l'une quelconque ces revendications 1 à 17,
**caractérisé en ce qu'**au moins une lampe supplémentaire (19) peut être fixée au boîtier de miroir (2).

19. Rétroviseur extérieur, notamment selon l'une quelconque des revendications 1 à 18,
**caractérisé en ce qu'**au moins une lampe supplémentaire (19) peut être fixée au boîtier de miroir (2) par le biais d'au moins une connexion par fermeture géométrique (38, 39).

20. Rétroviseur extérieur selon la revendication 19,
**caractérisé en ce que** la connexion par fermeture géométrique (38, 39) présente au moins une came (38) prévue sur le boîtier de miroir (2) qui s'engrène dans un évidement (39) sur un boîtier (40) de la lampe supplémentaire (19).

21. Rétroviseur extérieur, notamment selon l'une quelconque des revendications 1 à 20,
**caractérisé en ce que** le support de miroir (3) s'engrène avec au moins une pièce à fermeture géométrique (13, 14) dans au moins un logement (41) d'un boîtier (40) d'une lampe supplémentaire (19).

22. Rétroviseur extérieur selon la revendication 21,
**caractérisé en ce que** le logement (41) est réalisé de manière élargie à l'encontre du sens d'enfichage du support de miroir (3).

23. Rétroviseur extérieur selon la revendication 21 ou 22,
**caractérisé en ce que** le logement (41) est recouvert par une partie (44) du boîtier de miroir (2).
